# EUROPÄISCHE PATENTANMELDUNG

(11) **EP 4 703 201 A1**
(43) Veröffentlichungstag der Anmeldung: **04.03.2026**
(21) Anmeldenummer: 25189551.2
(22) Anmeldetag: 15.07.2025
(51) Int. Cl.: B60P 7/08

(54) **VORRICHTUNG ZUR ANBINDUNG EINES EINRICHTUNGSGEGENSTANDS AN EINE MIT ÖFFNUNGEN VERSEHENE, ENTLANG DER INNENWAND EINES FAHRZEUGS VERLAUFENDE SCHIENE**

(30) Priorität: 27.08.2024 DE 202024104820 U
(71) Anmelder: Sortimo International GmbH, 86441 Zusmarshausen (DE)
(72) Erfinder: Mandricenko, Walter, 89331 Burgau (DE)
(74) Vertreter: Charrier Rapp & Liebau

(57) **Zusammenfassung**

Die Erfindung betrifft eine Vorrichtung zur Anbindung eines Einrichtungsgegenstands (1, 2) an eine mit Öffnungen (3) versehene, entlang der Innenwand (4) eines Fahrzeugs verlaufende Schiene (5). Bekannte derartige Vorrichtungen benötigen Werkzeug zum Befestigen und Lösen.

Die Aufgabe, eine entsprechende Vorrichtung bereitzustellen, welche ein sicheres, gleichwohl schnell lösbares Anbinden des Einrichtungsgegenstandes an das Fahrzeug ermöglicht, wird gelöst durch mindestens eine an dem Einrichtungsgegenstand (1, 2) um eine Drehachse (8) drehbar gelagerte erste Sperrklinke (10), welche an ihrer in Richtung einer Öffnung (3) weisenden Vorderseite (13) einen ersten Sperrzahn (9) trägt, der durch Drehung der Sperrklinke (10) um die Drehachse (8) in sperrenden Eingriff mit einer ersten Seitenkante (11) dieser Öffnung (3) bringbar bzw. aus diesem Eingriff lösbar ist.

## Beschreibung

Die Erfindung betrifft eine Vorrichtung zur Anbindung eines Einrichtungsgegenstands an eine mit Öffnungen versehene, entlang der Innenwand eines Fahrzeugs verlaufende Schiene nach dem Oberbegriff des Anspruchs 1.

Ein Befestigungssystem zur Befestigung einer Fahrzeugeinrichtung an der Innenwand eines Fahrzeugs ist Gegenstand der DE 10 2005 015 348 B4. Das Befestigungssystem ist für die Befestigung von Fahrzeugeinrichtungen in Fahrzeugen ausgebildet und weist eine Befestigungsvorrichtung auf, mit der eine in dem Fahrzeug angeordnete Fahrzeugeinrichtung mit einer Schiene an einer Fahrzeuginnenwand haltend verbunden werden kann. Die Befestigungsvorrichtung umfasst einen Schwenkarm, der an seinem Ende mit einer als erstes Befestigungsmittel ausgebildeten Verschraubung an der Fahrzeugeinrichtung und mit seinem anderen Ende mit einem zweiten Befestigungsmittel in Gestalt eines Trägers an der Schiene der Fahrzeuginnenwand befestigt ist. Die Befestigung erfordert eine Verschraubung.

Die DE 10 2013 108 807 A1 hat eine Befestigungsvorrichtung zur lösbaren Befestigung von Fahrzeugeinrichtungen an einer in einem Fahrzeug befestigten Schiene zum Gegenstand, bei der die Befestigungsvorrichtung an erstes, an der Schiene befestigbares Befestigungsmittel und ein zweites, an der Fahrzeugeinrichtung befestigbares Befestigungsmittel aufweist, die über einen Schwenkarm miteinander verbunden sind, wobei ein drittes, an der Schiene oder der Fahrzeugeinrichtung befestigbares Befestigungselement vorgesehen ist, sowie ein Stützarm, der das dritte Befestigungsmittel mit dem gegenüberliegenden Befestigungsmittel verbindet. Auch bei dem Gegenstand dieser Druckschrift findet eine dauerhafte Verbindung zwischen Einrichtungsgegenstand und Fahrzeug statt, die nur mit Werkzeug gelöst werden kann.

Es besteht daher die Aufgabe, eine Vorrichtung zur Anbindung eines Einrichtungsgegenstands an eine mit Öffnungen versehene, entlang der Innenwand eines Fahrzeugs verlaufende Schiene bereitzustellen, welche ein sicheres, gleichwohl schnell lösbares Anbinden des Einrichtungsgegenstands an das Fahrzeug ermöglicht.

Gelöst wird diese Aufgabe mit den kennzeichnenden Merkmalen des Anspruchs 1. Vorteilhafte Ausgestaltungen sind den Unteransprüchen entnehmbar.

Gegenstand der Erfindung ist eine Vorrichtung zur Anbindung eines Einrichtungsgegenstands an eine mit Öffnungen versehene, entlang der Innenwand eines Fahrzeugs verlaufende Schiene, wobei eine an dem Einrichtungsgegenstand um eine Drehachse drehbar gelagerte erste Sperrklinke, welche an ihrer in Richtung einer Öffnung weisenden Vorderseite einen ersten Sperrzahn trägt, der durch Drehung der Sperrklinke um die Drehachse in sperrenden Eingriff mit einer ersten Seitenkante dieser Öffnung bringbar bzw. aus diesem Eingriff lösbar ist. Hierdurch ergibt sich eine schnelle Verbindung zwischen Einrichtungsgegenstand und Fahrzeug
Vorzugsweise weist der Einrichtungsgegenstand eine Lagerung für eine Nockenwelle, welche parallel zu der Drehachse verläuft und bei Drehung auf die der Vorderseite gegenüberliegende Rückseite der Sperrklinke wirkt und die Sperrklinke um die Drehachse dreht. Hierdurch ergibt sich eine einfache und wirkungsvolle Betätigung der Sperrklinke.

Vorzugsweise sind die Lagerungen für die Nockenwelle und die Drehachse innerhalb eines an dem Einrichtungsgegenstand befestigbaren Gehäuses angeordnet. Dies hat den Vorteil einer geschlossenen Ausbildung und einer nachträglichen Anbringbarkeit des Gehäuses an der Fahrzeugeinrichtung bzw. dem Einrichtungsgegenstand.

Vorzugsweise ist die Nockenwelle fest mit einem Betätigungshebel verbunden ist, durch dessen Betätigung die Nockenwelle in der Lagerung drehbar. Auf diese Weise kann eine einfache und gut handhabbare Betätigung der Nockenwelle stattfinden.

In einer bevorzugten Ausführungsform ist auf der Drehachse eine zweite Sperrklinke angeordnet, auf deren Rückseite die Nockenwelle ebenfalls wirkt, wodurch ein an der der Drehachse gegenüberliegender Vorderseite der zweiten Sperrklinke angeordneter zweiter Sperrzahn in sperrenden Eingriff mit einer der ersten Seitenkante gegenüberliegenden zweiten Seitenkante der Öffnung der Schiene bringbar bzw. aus diesem Eingriff lösbar ist. Dies hat den Vorteil, dass bereits mit der Verbindung einer erfindungsgemäßen Vorrichtung mit der Fahrzeuginnenwand eine stabile Befestigung des Einrichtungsgegenstands möglich ist.

Vorzugsweise weist der Betätigungshebel einen Sicherungsschieber gegen unbeabsichtigtes Lösen des sperrenden Eingriffs auf. Auf diese Weise kann ein unbeabsichtigtes Lösen verhindert werden.

In einer vorteilhaften Ausgestaltung weist die Schiene jeweils zwischen nebeneinander liegenden Öffnungen für die Aufnahme der Sperrklinken schlitzförmige Öffnungen für die Anbindung eines weiteren Anbindungssystems auf. Es kann sich hierbei um ein Anbindungssystem handeln wie es in der DE 20 2019 106 517 U1 beschrieben ist.

In einer vorzugsweisen Ausgestaltung der Erfindung handelt es sich bei dem Einrichtungsgegenstand um ein Regal. Alternativ hierzu kann es sich auch um einen mit Rollen versehenen fahrbaren Regalwagen handeln.

Ein Ausführungsbeispiel der Erfindung wird im Folgenden unter Bezugnahme auf die begleitenden Zeichnungen näher erläutert. Diese zeigen:
- **Fig. 1**: Eine perspektivische Darstellung der seitlichen Innenwand eines Fahrzeugs mit einem darin befestigten, als Regal ausgebildeten Einrichtungsgegenstands;
- **Fig. 2**: Eine schematische, perspektivische Darstellung einer entlang der Innenwand eines Fahrzeugs angeordneten Schiene mit einem daran befestigten, als fahrbarer Regalwagen ausgebildeten Einrichtungsgegenstands;
- **Fig. 3**: Zwei perspektivische Darstellungen eines Gehäuses mit einer darin angeordneten Vorrichtung zur Anbindung eines Einrichtungsgegenstands an eine (hier nicht dargestellte) Schiene in der verriegelten (links) und entriegelten (rechts) Position;
- **Fig. 4**: Eine Darstellung der in Fig. 3 gezeigten Vorrichtung im Längsschnitt in der verriegelten (links) und entriegelten (rechts) Position;
- **Fig. 5**: Eine Darstellung gemäß Fig. 4 mit zusätzlich dargestellter Innenwand und Schiene des Fahrzeugs in verriegelter (links) und entriegelter (rechts) Position;
- **Fig. 6**: Eine vergrößerte Darstellung der in Figuren 3 - 5 gezeigten Vorrichtung mit zusätzlicher Darstellung einer Rückholfeder in verriegelter Position in einem seitlichen Schnitt;
- **Fig. 7**: Eine Darstellung gemäß Fig. 6, teilweise geschnitten, von oben, ebenfalls in verriegelter Position.

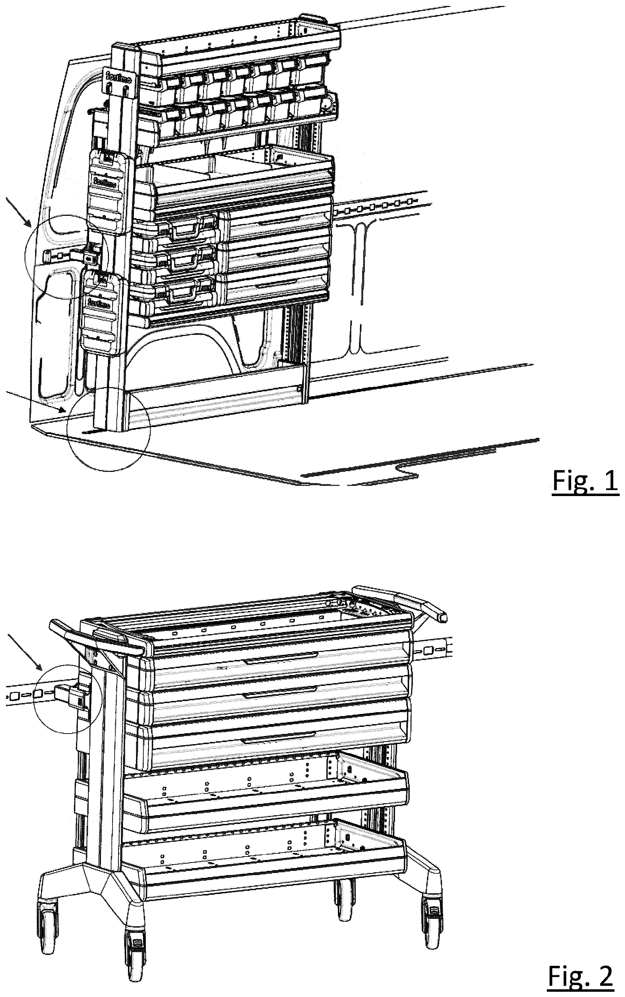

Die Problematik und Einbausituation des Gegenstands der vorliegenden Erfindung ist in den Figuren 1 und 2 dargestellt.

Häufig stellt sich die Notwendigkeit, in Fahrzeuge z. B. Kombis, Lieferwägen, Kastenwägen oder andere, von Firmen oder Handwerkern genutzte Fahrzeuge, Einrichtungsgegenstände wie Regale oder Schränke einzubauen. Hierbei ergibt sich das Problem, dass die Einrichtungsgegenstände in einer Art und Weise mit dem Innenraum des Fahrzeugs verbunden werden müssen, dass gewährleistet ist, dass bei plötzlichen Ausweich- und Bremsmanövern sowie bei Unfällen kein Lösen des Einrichtungsgegenstands von dem Fahrzeug stattfindet, sodass das Regal nicht unkontrolliert durch das Fahrzeug fallen und Personen verletzen kann. Hierzu werden nach dem Stand der Technik, wie er in der Beschreibungseinleitung genannt ist, die Einrichtungsgegenstände fest mit der Fahrzeuginnenseite, z.B. mit Schienen, welche entlang der Fahrzeuginnenseite angeordnet sind, verschraubt. Figur 1 zeigt eine Fahrzeuginnenseite mit einer Innenwand 4, wobei es sich hier um die Seitenwand eines Kastenwagens handelt, und mit einer entlang dieser Innenwand 4 verlaufenden Schiene 5, welche mit der Innenwand 4 fest verbunden ist. Diese Schiene 5 weist in regelmäßigen Abständen Öffnungen 3 auf, welche quadratisch bzw. rechteckig ausgebildet sind.

Auf dem Boden des Fahrzeugs, welcher senkrecht zu der Innenwand 4 verläuft, steht ein als Regal ausgebildeter Einrichtungsgegenstand 1, der im dargestellten Ausführungsbeispiel eine Vielzahl von Schubläden, Transportkoffern und Wannen aufweist, die herausnehmbar sein können. Das Regal weist außerdem zwei Seitenwangen 21 auf, über welche es sowohl mit der Seitenwand 4 als auch mit dem Boden des Fahrzeugs verbindbar ist. Hierzu befinden sich etwa auf halber Höhe der Seitenwangen 21 erfindungsgemäße Vorrichtungen zur Anbindung dieses als Regal ausgebildeten Einrichtungsgegenstands 1 an die Schiene 5 in der Innenwand 4, welche im Folgenden näher beschrieben werden.

Das Regal wird außerdem am Boden des Fahrzeugs befestigt, und zwar ebenfalls mit Verbindungsvorrichtungen, die in eine entlang des Bodens geführte Schiene eingreifen, jedoch vorliegend nicht näher beschrieben sind. Die doppelte Anbindung, sowohl an die Seitenwand als auch an den Boden, kann notwendig sein, um eine maximale Stabilität zu erzielen. Es kann jedoch auch bereits genügen, das Regal an mehreren Punkten an der Seitenwand bzw. der Schiene 5 zu befestigen.

Figur 2 zeigt eine alternative Ausgestaltung dahingehend, dass an Stelle eines Regals ein Regalwagen als Einrichtungsgegenstand 2 mit dem Fahrzeug verbunden wird. Auch Figur 2 zeigt schematisch die bereits in Figur 1 dargestellte mit der Innenwand 4 des Fahrzeugs verbundene Schiene 5 mit den rechteckigen Öffnungen 3, in welche die mit dem als Regalwagen ausgebildeten Einrichtungsgegenstands verbundenen erfindungsgemäßen Vorrichtungen eingreifen.

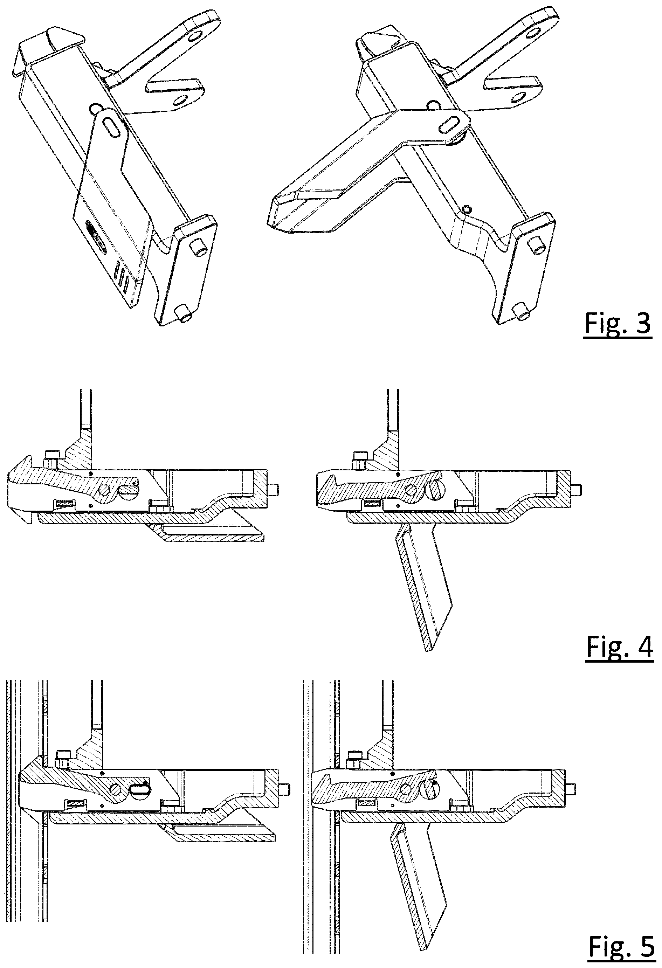

Die erfindungsgemäße Verbindungsvorrichtung der Einrichtungsgegenstände mit der in dem Fahrzeug angeordneten Schiene zeigen die Figuren 3 bis 7.

Figur 3 zeigt eine erfindungsgemäße Vorrichtung zur Anbringung an einem (hier nicht dargestellten) Einrichtungsgegenstand 1 mit einem Gehäuse 14, links in der verriegelten und rechts in der unverriegelten Position. Innerhalb des Gehäuses 14 befindet sich eine Lagerung 6 für eine Nockenwelle 7, welche in Figur 3 aufgrund der geschlossenen Darstellung nicht unmittelbar zu sehen ist. An dieser Nockenwelle 7 ist ein Betätigungshebel 15 angeordnet bzw. fest mit der Nockenwelle 7 verbunden, bei dessen Betätigung von der verriegelten Position (links) in die entriegelte Position (rechts) die Nockenwelle 7 innerhalb ihrer Lagerung 6 gedreht wird. Das Gehäuse 14 weist eine Reihe von nicht näher bezeichneten Befestigungsmöglichkeiten zu dessen Anbringung an dem Einrichtungsgegenstand auf. Parallel zu der Nockenwelle 7 läuft eine Drehachse 8, um welche zwei Sperrklinken rotierbar sind, die durch die Nockenwelle 7 bzw. durch Betätigen der Nockenwelle 7 mit Hilfe des Betätigungshebels 15 zwischen zwei verschiedenen Positionen hin und her bewegbar sind, wie es nachfolgend in den Figuren 4 und 5 im Einzelnen dargestellt ist.

Figur 4 zeigt auf der linken Seite die verriegelte Position. Der Betätigungshebel 15 liegt also an dem Gehäuse 14 an und die Nockenwelle 7 befindet sich in einer Position, in der die darauf angeordneten Nocken parallel zu den Betätigungshebel 15 verlaufen. Die Sperrklinke 10, welche auf der Drehachse 8 gelagert ist, liegt mit ihrer Rückseite 12 auf der Nockenwelle 7 auf, wodurch die der Rückseite der Sperrklinke 10 gegenüberliegende Vorderseite 13 nach außen, in Figur 4 (links) nach oben, gedrückt wird.

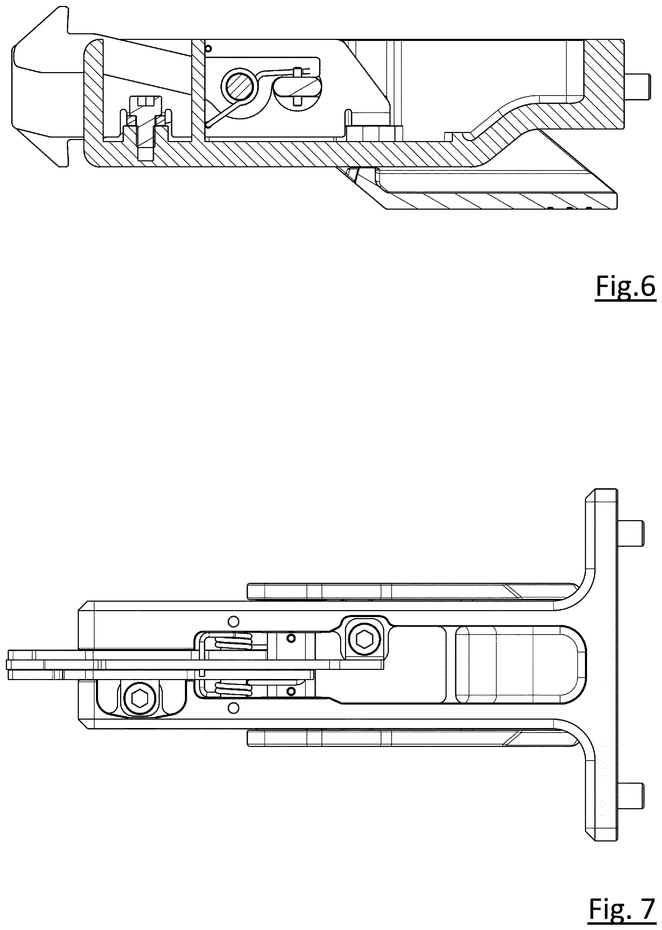

Die Nockenwelle 7 wirkt darüber hinaus auf eine zweite Sperrklinke 16, welche in dem verriegelten Zustand (Figur 4, links) so nach unten gedrückt wird, dass der Sperrzahn 17 der zweiten Sperrklinke 16 nach unten gedrückt wird. Die entsprechende Stellung der Nockenwelle 7 in der Lagerung 6 erfolgt unter der Wirkung einer Feder 22, wie sie in den Figuren 6 und 7 schematisch dargestellt ist.

Betätigt man den in Figur 4 dargestellten Betätigungshebel von der verriegelten Position (links) in die entriegelte Position (rechts), so gelangt die Nockenwelle 7 in eine Position, in der sie auf die Rückseite 12 der Sperrklinke drückt und somit eine Bewegung der Sperrklinke um die Drehachse 8 erzeugt, wodurch die Vorderseite 13 der Sperrklinke 10 mit dem Sperrzahn 9 sich in die entriegelte Position begibt, also nach innen bzw. gemäß Figur 4 nach unten fährt. Gleiches geschieht mit der zweiten Sperrklinke 16 und deren zweitem Sperrzahn 17.

Die Anordnung wird noch besser verständlich, wenn in Figur 5 auch die Innenwand 4 des Fahrzeugs mit der daran angeordneten, mit Öffnungen 3 versehenen Schiene 5 berücksichtigt wird. Hier kann man deutlich erkennen, dass in der links dargestellten Anordnung eine Verriegelung der Vorrichtung mit der Schiene 5 bewirkt wird, indem die erste Sperrklinke 10 mit dem ersten Sperrzahn 9 mit einer ersten Seitenkante 11 der Öffnung 3 innerhalb der Seitenwand 5 verrastet und die zweite Sperrklinke 16 mit dem zweiten Sperrzahn 17 mit einer gegenüberliegenden zweiten Seitenkante 18 der Öffnung 3 der Schiene verrastet. Die gelöste Stellung ist hier wiederum rechts dargestellt.

Die Figur 6 zeigt die Anordnung in dem verriegelten Zustand noch einmal in vergrößerter Darstellung, jedoch ohne Seitenwand und Schiene. Hier ist insbesondere die Beaufschlagung der Nockenwelle 7 innerhalb der Lagerung 6 mit einer Feder 22 gezeigt, welche um die Drehachse 8 gewickelt ist und sich gegenüber dem Gehäuse 14 einerseits und gegenüber der Nockenwelle 7 andererseits abstützt. Diese Feder sorgt dafür, dass die Nockenwelle 7 in die verriegelte Position gedrückt wird. Der Übergang von der verriegelten Position in die entriegelte Position durch Bewegung des Betätigungshebels 15 erfolgt also gegen die Wirkung der Feder 22.

Figur 7 zeigt schließlich die Anordnung von oben in teilweise geschnittener Darstellung. Hier ist besonders deutlich ein Mittelblech 23 erkennbar, welches zwischen der ersten Sperrklinke 10 und der zweiten Sperrklinke16 verläuft, um diese voneinander zu trennen.

Die Vorrichtung funktioniert wie folgt.

Falls das Gehäuse 14 noch nicht an dem Einrichtungsgegenstand 1 bzw. 2 befestigt sein sollte, ist dieses zunächst mit den dafür vorgesehenen, in den Figuren dargestellten, jedoch nicht näher beschriebenen Befestigungseinrichtungen mit dem Einrichtungsgegenstand 1, 2 zu verbinden, also zu verschrauben, oder zu vernieten, ggf. auch zu verkleben. Nach erfolgter Verbindung des Gehäuses 14 mit dem Einrichtungsgegenstand 1 bzw. 2 kann der Einrichtungsgegenstand 1 bzw. 2 in das Fahrzeug verbracht und in den Bereich der Innenwand 4 gebracht werden. Der Einrichtungsgegenstand wird dabei so nahe an die Öffnungen 3 der Schiene 5 herangerückt, dass in der entriegelten Position gemäß Figuren 3, 4 und 5, rechts, die Sperrklinken 10 und 16 in eine Öffnung 3 der Schiene 5 eingeführt werden können, so wie es in Figur 5, rechts dargestellt ist. Sodann wird der Betätigungshebel 15 betätigt, um die in Figur 5, links dargestellte Position zu erreichen. Durch Wirkung der Nockenwelle 7 bewegen sich die Sperrklinken 10 bzw. 16 dann nach oben bzw. unten und die Sperrzähne 9 bzw. 17 verrasten gegenüber der Seitenkanten 11 bzw. 18 der jeweiligen Öffnung 3 innerhalb der Schiene 5. Danach kann der Sicherungsschieber 19 in den Betätigungshebel 15 betätigt werden, um ein unbeabsichtigtes Lösen zu verhindern.

Um den Einrichtungsgegenstand 1 bzw. 2 wieder von dem Fahrzeug zu lösen geht man in umgekehrter Reihenfolge vor. Gegebenenfalls ist erst der Sicherungsschieber 19 zu entsichern. Anschließend kann der Betätigungshebel 15 von der in der Figur 5 links dargestellten in die in der Figur rechts dargestellten Position verbracht werden. Daraufhin schwenken die Sperrklinken 10 und 16 mit zugehörigen Sperrzähnen 9 und 17 wieder ein und können zusammen mit dem Gehäuse 14 und dem vollständigen Einrichtungsgegenstand 1 aus der Öffnung 3 entfernt werden.

Die erfindungsgemäße Vorrichtung funktioniert genauso an einem Regalwagen, wie er in Figur 2 dargestellt ist. Sie wird ggf. ergänzt durch weitere Verrastungs- bzw. Verbindungsmöglichkeiten im Bodenbereich des Fahrzeugs, welche hier nicht im Einzelnen dargestellt sind.

In einer vereinfachten und in den Figuren nicht dargestellten Ausführungsform kann auch mit nur einer Sperrklinke gearbeitet werden, welche sich dann nur gegen eine Seitenkante der Öffnung abstützt. Dies ist besonders dann möglich wenn eine zweite errfindungsgemäße Vorrichtung an der gegenüberliegenden Seitenwange des Einrichtungsgegenstandes eine in umgekehrter Richtung mit der dortigen Öffnung zusammenwirkende Sperrklinke aufweist, so dass der Einrichtungsgegenstand gegenüber der Schiene verspannt werden kann.

Ferner kann die Erfindung auch ohne Nockenwelle ausgeführt werden. In diesem Falle ist die Drehachse mit anderen Mitteln zu drehen, z.B. durch einen unmittelbar daran angeordneten Hebel oder Griff.

## Patentansprüche

1. Vorrichtung zur Anbindung eines Einrichtungsgegenstands (1, 2) an eine mit Öffnungen (3) versehene, entlang der Innenwand (4) eines Fahrzeugs verlaufende Schiene (5), **gekennzeichnet durch** mindestens eine an dem Einrichtungsgegenstand (1, 2) um eine Drehachse (8) drehbar gelagerte erste Sperrklinke (10), welche an ihrer in Richtung einer Öffnung (3) weisenden Vorderseite (13) einen ersten Sperrzahn (9) trägt, der durch Drehung der Sperrklinke (10) um die Drehachse (8) in sperrenden Eingriff mit einer ersten Seitenkante (11) dieser Öffnung (3) bringbar bzw. aus diesem Eingriff lösbar ist.

2. Vorrichtung nach Anspruch 1, **gekennzeichnet durch** eine an dem Einrichtungsgegenstand (1, 2) angeordnete Lagerung (6) für eine Nockenwelle (7), welche parallel zu der Drehachse (8) verläuft und bei Drehung auf die der Vorderseite (13) gegenüberliegende Rückseite (12) der Sperrklinke (10) wirkt und die Sperrklinke (10) um die Drehachse (8) dreht.

3. Vorrichtung nach Anspruch 2, **dadurch gekennzeichnet, dass** die Lagerungen (6) für die Nockenwelle (7) und die Drehachse (8) innerhalb eines an dem Einrichtungsgegenstand (1, 2) befestigbaren Gehäuses (14) angeordnet sind.

4. Vorrichtung nach einem der Ansprüche 2 oder 3, **dadurch gekennzeichnet, dass** die Nockenwelle (7) fest mit einem Betätigungshebel (15) verbunden ist, durch dessen Betätigung die Nockenwelle (7) in der Lagerung (6) drehbar ist.

5. Vorrichtung nach einem der voranstehenden Ansprüche, **dadurch gekennzeichnet, dass** auf der Drehachse (8) eine zweite Sperrklinke (16) angeordnet ist, auf deren Rückseite die Nockenwelle (7) ebenfalls wirkt, wodurch ein an der der Drehachse (8) gegenüberliegender Vorderseite der zweiten Sperrklinke (16) angeordneter zweiter Sperrzahn (17) in sperrenden Eingriff mit einer der ersten Seitenkante (11) gegenüberliegenden zweiten Seitenkante (18) der Öffnung (3) der Schiene (5) bringbar bzw. aus diesem Eingriff lösbar ist.

6. Vorrichtung nach einem der Ansprüche 4 oder 5, **dadurch gekennzeichnet, dass** der Betätigungshebel (15) einen Sicherungsschieber (19) gegen unbeabsichtigtes Lösen des sperrenden Eingriffs aufweist.

7. Vorrichtung nach einem der voranstehenden Ansprüche, **dadurch gekennzeichnet, dass** die Schiene (5) jeweils zwischen zwei nebeneinander liegenden Öffnungen (3) für die Aufnahme der Sperrklinken (10, 16) schlitzförmige Öffnungen (20) für die Anbindung eines weiteren Anbindungssystems aufweist.

8. Vorrichtung nach einem der voranstehenden Ansprüche, **dadurch gekennzeichnet, dass** es sich bei dem Einrichtungsgegenstand (1) um ein Regal handelt.

9. Vorrichtung nach einem der Ansprüche 1 - 7, **dadurch gekennzeichnet, dass** es sich bei dem Einrichtungsgegenstand (2) um einen mit Rollen versehenen fahrbaren Regalwagen handelt.

## Geänderte Patentansprüche

### Geänderte Patentansprüche gemäss Regel 137(2) EPÜ.

1. Vorrichtung zur Anbindung eines Einrichtungsgegenstands (1, 2) an eine mit Öffnungen (3) versehene, entlang der Innenwand (4) eines Fahrzeugs verlaufende Schiene (5), mit mindestens einer an dem Einrichtungsgegenstand (1, 2) um eine Drehachse (8) drehbar gelagerten ersten Sperrklinke (10), welche an ihrer in Richtung einer Öffnung (3) weisenden Vorderseite (13) einen ersten Sperrzahn (9) trägt, der durch Drehung der Sperrklinke (10) um die Drehachse (8) in sperrenden Eingriff mit einer ersten Seitenkante (11) dieser Öffnung (3) bringbar bzw. aus diesem Eingriff lösbar ist, **gekennzeichnet durch**
- eine an dem Einrichtungsgegenstand (1, 2) angeordnete Lagerung (6) für eine Nockenwelle (7), welche parallel zu der Drehachse (8) verläuft und bei Drehung auf die der Vorderseite (13) gegenüberliegende Rückseite (12) der Sperrklinke (10) wirkt und die Sperrklinke (10) um die Drehachse (8) dreht.

2. Vorrichtung nach Anspruch 2, **dadurch gekennzeichnet, dass** die Lagerungen (6) für die Nockenwelle (7) und die Drehachse (8) innerhalb eines an dem Einrichtungsgegenstand (1, 2) befestigbaren Gehäuses (14) angeordnet sind.

3. Vorrichtung nach einem der voranstehenden Ansprüche, **dadurch gekennzeichnet, dass** die Nockenwelle (7) fest mit einem Betätigungshebel (15) verbunden ist, durch dessen Betätigung die Nockenwelle (7) in der Lagerung (6) drehbar ist.

4. Vorrichtung nach einem der voranstehenden Ansprüche, **dadurch gekennzeichnet, dass** auf der Drehachse (8) eine zweite Sperrklinke (16) angeordnet ist, auf deren Rückseite die Nockenwelle (7) ebenfalls wirkt, wodurch ein an der der Drehachse (8) gegenüberliegender Vorderseite der zweiten Sperrklinke (16) angeordneter zweiter Sperrzahn (17) in sperrenden Eingriff mit einer der ersten Seitenkante (11) gegenüberliegenden zweiten Seitenkante (18) der Öffnung (3) der Schiene (5) bringbar bzw. aus diesem Eingriff lösbar ist.

5. Vorrichtung nach einem der Ansprüche 3 oder 4, **dadurch gekennzeichnet, dass** der Betätigungshebel (15) einen Sicherungsschieber (19) gegen unbeabsichtigtes Lösen des sperrenden Eingriffs aufweist.

6. Vorrichtung nach einem der voranstehenden Ansprüche, **dadurch gekennzeichnet, dass** die Schiene (5) jeweils zwischen zwei nebeneinander liegenden Öffnungen (3) für die Aufnahme der Sperrklinken (10, 16) schlitzförmige Öffnungen (20) für die Anbindung eines weiteren Anbindungssystems aufweist.

7. Vorrichtung nach einem der voranstehenden Ansprüche, **dadurch gekennzeichnet, dass** es sich bei dem Einrichtungsgegenstand (1) um ein Regal handelt.

8. Vorrichtung nach einem der Ansprüche 1 - 6, **dadurch gekennzeichnet, dass** es sich bei dem Einrichtungsgegenstand (2) um einen mit Rollen versehenen fahrbaren Regalwagen handelt.
